# EUROPEAN PATENT APPLICATION

(11) **EP 4 838 255 A1**
(43) Date of publication of application: **11.11.2026**
(21) Application number: 24915162.2
(22) Date of filing: 26.12.2024
(51) Int. Cl.: G01S 7/481, G01S 17/08, A47L 11/40, A47L 11/24

(54) **LASER RADAR AND CLEANING ROBOT**

(30) Priority: 05.01.2024 CN 202410024010
(71) Applicant: Beijing Roborock Technology Co., Ltd., Beijing 102206 (CN)
(72) Inventor: WU, Jiang, Beijing 102206 (CN); ZHANG, Wei, Beijing 102206 (CN); LIANG, Bing, Beijing 102206 (CN); LIU, Bo, Beijing 102206 (CN)
(74) Representative: Maiwald GmbH
(86) International application number: PCT/CN2024/142585
(87) International publication number: WO 2025/145947

(57) **Abstract**

Disclosed in the present application are a laser radar and a cleaning robot. The laser radar comprises a mounting cylinder, a transmitting unit, which comprises a laser transmitter and a transmitting lens, the laser transmitter and the transmitting lens being respectively mounted at two opposite ends of the mounting cylinder, and a receiving unit, which comprises a receiving lens, the receiving lens being sleeved on the outer side of the mounting cylinder, and a fitting surface of the receiving lens and the mounting cylinder being configured to be in spherical contact.

## Description

The present disclosure claims priority to Chinese Patent Application No. 202410024010.2, filed with the China National Intellectual Property Administration on January 5, 2024 and entitled "LIDAR AND CLEANING ROBOT", which is incorporated herein by reference in its entirety.

### TECHNICAL FIELD

The present disclosure relates to the technical field of smart homes, and in particular, to a lidar and a cleaning robot.

### BACKGROUND

With the continuous development of science and technology and the ongoing improvement of people's living standards, cleaning robots, such as intelligent sweeping robots, have increasingly become part of our daily lives. Currently, a lidar is typically provided in a cleaning robot to detect the surrounding environment for the cleaning robot. The lidar is an important sensor for the cleaning robot, playing a vital role in operating conditions such as mapping, navigation, and obstacle avoidance. To ensure good detection performance, existing lidars generally require high processing accuracy.

### SUMMARY

A series of simplified concepts is introduced in the SUMMARY section, which will be further described in detail in the DETAILED DESCRIPTION section below. This section of the present disclosure is not intended to attempt to define key features and essential technical features of the claimed technical solutions, nor is it intended to attempt to delineate the protection scope of the claimed technical solutions.

According to embodiments of a first aspect of the present disclosure, a lidar is provided, which includes: a mounting barrel; an emission unit, the emission unit including a laser emitter and an emission lens, and the laser emitter and the emission lens being mounted at two opposite ends of the mounting barrel, respectively; and a receiving unit, the receiving unit including a receiving lens, the receiving lens sleeving an outer side of the mounting barrel, and mating surfaces of the receiving lens and the mounting barrel being configured to be in spherical contact.

In a feasible embodiment, an outer peripheral side of the mounting barrel is provided with a convex spherical contact surface, an inner peripheral side of the receiving lens is provided with a concave spherical contact surface, and the convex spherical contact surface is disposed opposite to and is at least partially mated with the concave spherical contact surface.

In a feasible embodiment, a first mounting opening for accommodating the emission lens is formed at an end of the mounting barrel away from the laser emitter; and the lidar further includes a pressing ring, the pressing ring is located on a side of the emission lens away from the laser emitter, and the pressing ring is connected to a side wall of the first mounting opening to clamp the emission lens at the first mounting opening.

In a feasible embodiment, the side wall of the first mounting opening is provided with a first boss, the emission lens includes a first incident surface and a first exit surface, the first incident surface overlaps the first boss, and the pressing ring is in contact with the first exit surface and is connected to the side wall of the first mounting opening.

In a feasible embodiment, the side wall of the first mounting opening is further provided with a second boss, and an inner diameter of the first boss is smaller than an inner diameter of the second boss and the first boss is located on a side of the second boss close to the laser emitter; a limiting groove is formed on the first exit surface; and the pressing ring includes a mounting end accommodated in the first mounting opening, a positioning groove is formed on an inner wall of the mounting end, the positioning groove is engaged with the limiting groove to enable the mounting end to be limited on a side of the second boss away from the first boss, and an outer wall of the mounting end is connected to the side wall of the first mounting opening.

In a feasible embodiment, the lidar further includes: a light-shielding ring, the light-shielding ring being sleeved on outside of the mounting barrel and being located above the receiving lens, and the light-shielding ring being configured to shield at least a part of light directed toward the receiving lens.

In a feasible embodiment, the light-shielding ring is connected to the mounting barrel by means of a snap-fit structure and/or an adhesive; and a gap is provided between the light-shielding ring and the receiving lens, such that the receiving lens and the mounting barrel are movable relative to each other.

In a feasible embodiment, the lidar further includes: a reflecting mirror, the reflecting mirror being obliquely disposed above the emission lens, and the reflecting mirror being configured to rotate around an optical axis of the receiving lens, where the receiving unit further includes a laser receiver, light emitted by the laser emitter passes through the emission lens, is redirected by the reflecting mirror, and is then projected, and returned received light is redirected by the reflecting mirror, passes through the receiving lens, and is then received by the laser receiver.

In a feasible embodiment, a part of the light emitted by the laser emitter that is emitted from the emission lens is redirected by the reflecting mirror and is then directed toward the receiving lens.

In a feasible embodiment, the mounting barrel, the receiving lens, and the laser receiver are mounted inside the fixed base; and the rotating base is rotatably connected above the fixed base, and the reflecting mirror is mounted on the rotating base.

In a feasible embodiment, the emission unit further includes an emission circuit configured as a flexible member, a part of the emission circuit is mounted inside the mounting barrel, and a part of the emission circuit is located outside the mounting barrel; and the lidar further includes a limiting ring, and the limiting ring is configured to be in contact with the part of the emission circuit located outside the mounting barrel to limit movement of at least a part of the emission circuit.

In a feasible embodiment, the laser emitter is arranged on the emission circuit, and the emission circuit is mounted on an end part of the mounting barrel away from the emission lens; and the limiting ring is mounted inside a fixed base of the lidar and is located below the mounting barrel to be in contact with the part of the emission circuit located outside the mounting barrel. In a feasible embodiment, an annular mounting groove is disposed inside the fixed base, a first step is disposed inside the mounting groove, and the receiving lens is fixed on the first step; and a positioning part located below the first step is disposed inside the fixed base, the limiting ring is provided with a snap-fit part, and the positioning part and the snap-fit part are adapted to limit movement of the limiting ring relative to the fixed base, where the snap-fit part includes a slot, and/or a notch, and/or a protrusion.

In a feasible embodiment, a clearance notch for providing clearance for the emission circuit is formed on the first step, an end part of the limiting ring facing the mounting barrel is provided with a protruding first supporting part, and the first supporting part is opposite to the clearance notch to support the emission circuit located in the clearance notch.

In a feasible embodiment, the lidar further includes: a driving part and a transmission part, the driving part being connected to a fixed base, and the driving part being connected to a rotating base by means of the transmission part to drive the rotating base to rotate relative to the fixed base.

In a feasible embodiment, the transmission part includes a transmission belt, a second supporting part is disposed in the fixed base, and the second supporting part is located below the transmission belt and is disposed adjacent to the transmission belt.

In a feasible embodiment, a belt groove is formed on the rotating base, the driving part includes an output shaft and a timing pulley mounted on the output shaft, and the transmission belt is wound around the belt groove and the timing pulley; and the second supporting part is located below the belt groove and is disposed adjacent to an opening of the belt groove.

In a feasible embodiment, a top of the second supporting part is not higher than an inner bottom of the belt groove; and the second supporting part and the timing pulley are distributed on two sides of the mounting barrel, one or a plurality of second supporting parts are provided, and the plurality of second supporting parts are spaced apart.

According to a second aspect of the present disclosure, a cleaning robot is provided, which includes: a device main body; and the lidar according to any one of the embodiments of the first aspect, the lidar being disposed on the device main body.

The above description is only an overview of the technical solutions of the present disclosure. To more clearly understand the technical means of the present disclosure to enable implementation in accordance with the content of the specification and to make the above and other objectives, features, and advantages of the present disclosure more obvious and easy to understand, the detailed description of the present disclosure is provided below.

### BRIEF DESCRIPTION OF THE DRAWINGS

By reading the detailed description of preferred embodiments below, various additional advantages and benefits will become clear to those of ordinary skill in the art. The drawings are provided solely for the purpose of illustrating the preferred embodiments and are not to be construed as limiting the present disclosure. In addition, the same components are denoted by the same reference numerals throughout the drawings. In the drawings:
FIG. 1 shows a schematic structural diagram of a lidar according to one embodiment of the present disclosure;
FIG. 2 shows a schematic structural diagram of the embodiment shown in FIG. 1 from a first perspective;
FIG. 3 shows a cross-sectional view of the embodiment shown in FIG. 1 from an A-A perspective;
FIG. 4 shows a partially enlarged schematic diagram of portion A in the embodiment shown in FIG. 3;
FIG. 5 shows a partially enlarged schematic diagram of portion B in the embodiment shown in FIG. 3;
FIG. 6 shows a schematic structural diagram of a part of a lidar according to one embodiment of the present disclosure;
FIG. 7 shows a schematic structural diagram of a fixed base according to one embodiment of the present disclosure;
FIG. 8 shows a schematic structural diagram of a limiting ring according to one embodiment of the present disclosure;
FIG. 9 shows a schematic structural diagram of another part of a lidar according to one embodiment of the present disclosure;
FIG. 10 shows a schematic structural diagram of yet another part of a lidar according to one embodiment of the present disclosure;
FIG. 11 shows a schematic structural diagram of the embodiment shown in FIG. 10 from one perspective;
FIG. 12 shows a schematic structural diagram of the embodiment shown in FIG. 10 from a second perspective;
FIG. 13 shows a schematic structural diagram of still another part of a lidar according to one embodiment of the present disclosure;
FIG. 14 shows a cross-sectional view of the embodiment shown in FIG. 13 from one perspective;
FIG. 15 shows a projection view of a receiving lens and an emission lens from one perspective according to one embodiment of the present disclosure; and
FIG. 16 shows a schematic structural diagram of a cleaning robot according to one embodiment of the present disclosure.

### Description of reference numerals

001: lidar, 100: fixed module, 110: emission unit, 111: laser emitter, 112: emission lens, 1121: first incident surface, 1122: first exit surface, 1123: limiting groove, 113: emission circuit, 120: receiving unit, 121: laser receiver, 122: receiving lens, 1221: concave spherical contact surface, 130: fixed base, 131: mounting groove, 132: second step, 133: threaded structure, 134: first step, 1341: clearance notch, 135: second supporting part, 140: mounting barrel, 141: convex spherical contact surface, 142: first boss, 143: second boss, 150: light-homogenizing element, 160: pressing ring, 161: positioning groove, 170: light-shielding ring, 180: limiting ring, 181: snap-fit part, 182: first supporting part, 200: rotating module, 210: reflecting mirror, 220: rotating base, 221: emission window, 222: receiving window, 223: base body, 2231: first slot, 2232: belt groove, 224: upper cover, 2241: second slot, 230: window lens, 240: optical filter, 300: driving part, 310: timing pulley, 400: main circuit, 500: bearing, 600: locking member, 700: transmission part, 002: cleaning robot, 021: device main body.

### DETAILED DESCRIPTION

In the following description, numerous specific details are set forth to provide a more thorough understanding of the technical solutions according to the present disclosure. However, it will be apparent to those skilled in the art that the technical solutions according to the present disclosure may be implemented without one or more of these details.

It should be noted that the terms used herein are only for the purpose of describing specific embodiments, and are not intended to limit exemplary embodiments according to the present disclosure. As used herein, the singular forms are intended to include the plural forms as well, unless the context clearly indicates otherwise. In addition, it should be further understood that the terms "comprise" and/or "include" as used in the specification indicate the presence of the stated features, integers, steps, operations, elements, and/or assemblies, but do not exclude the presence or addition of one or more other features, integers, steps, operations, elements, assemblies, and/or combinations thereof.

Exemplary embodiments according to the present disclosure will now be described in more detail with reference to the drawings. However, these exemplary embodiments may be implemented in various forms and should not be construed as being limited to the embodiments set forth herein. It should be understood that these embodiments are provided to make the disclosure of the present disclosure thorough and complete, and to fully convey the concepts of these exemplary embodiments to those of ordinary skill in the art.

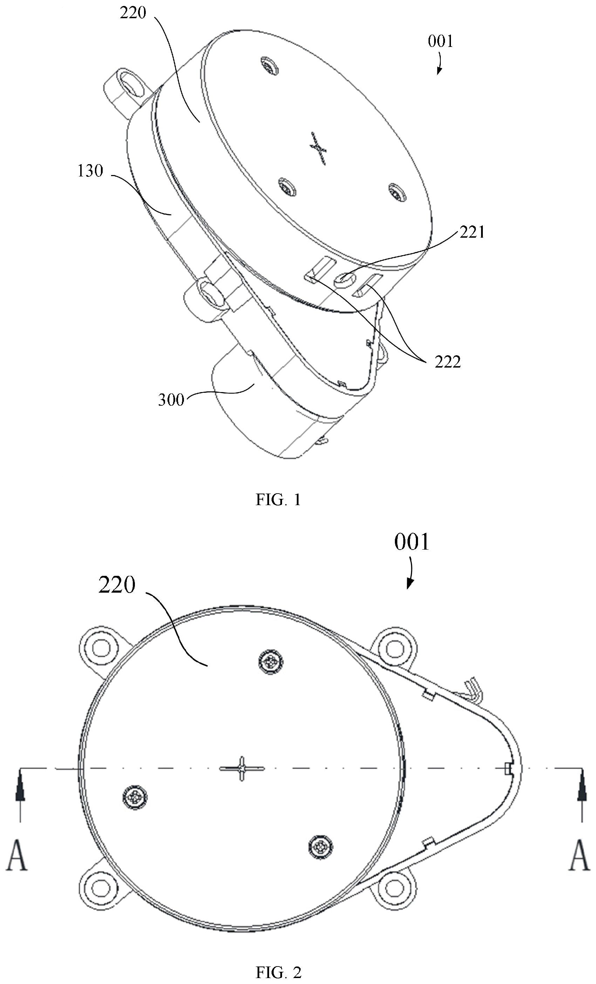

As shown in FIGs. 1 to 16, embodiments of a first aspect of the present disclosure provide a lidar 001, and embodiments of a second aspect of the present disclosure provide a cleaning robot 002. The cleaning robot 002 may be a sweeping robot, a sweeping and mopping integrated machine, or another cleaning robot 002 that meets requirements. The lidar 001 is applied to the cleaning robot 002.

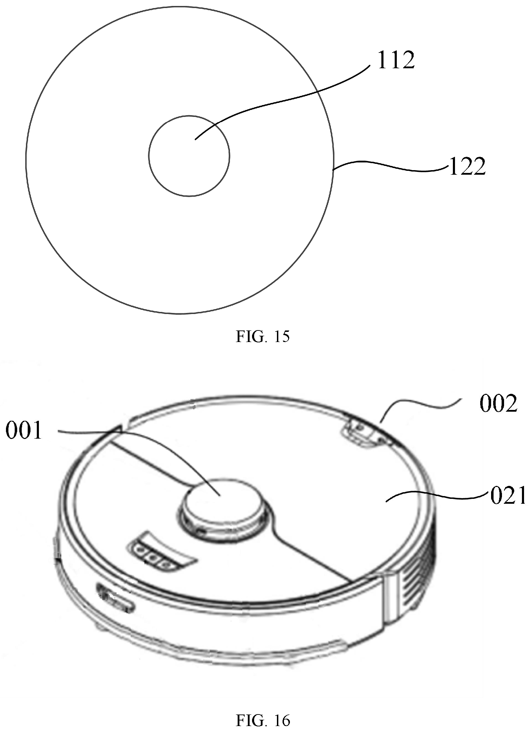

Specifically, as shown in FIG. 16, the cleaning robot 002 includes, but is not limited to: a device body, a cleaning system, a driving system, a sensing system, a control module, a power system, a human-machine interaction system, and the like. The systems described above cooperate with each other, such that the cleaning robot 002 can move autonomously to achieve a cleaning function. In the cleaning robot 002, functional elements and the like constituting the systems described above are integrally disposed in the device body. The sensing system may include the lidar 001. The lidar 001 is configured to detect information about obstacles and the surrounding environment around the cleaning robot 002. For example, the lidar 001 may achieve distance detection.

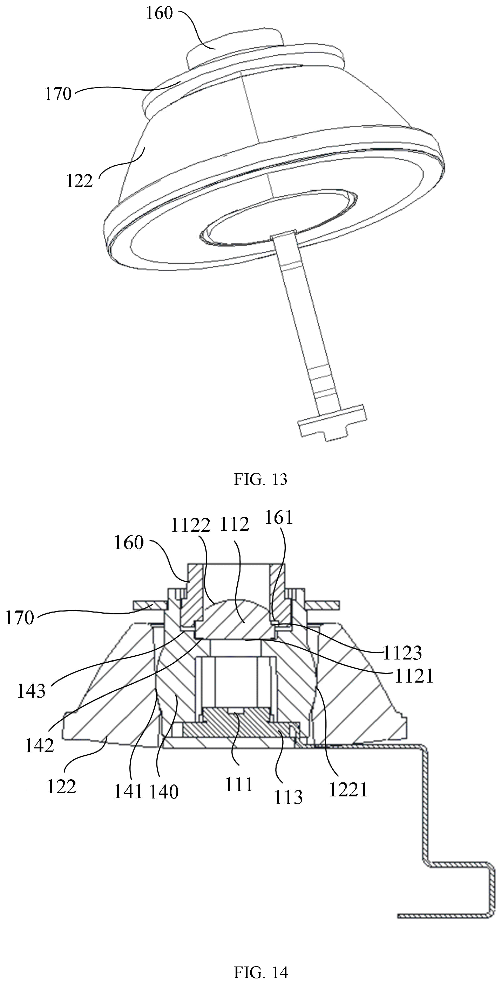

As shown in FIGs. 13 and 14, the lidar 001 according to the embodiments of the present disclosure includes: a mounting barrel 140; an emission unit 110, the emission unit 110 including a laser emitter 111 and an emission lens 112, and the laser emitter 111 and the emission lens 112 being mounted at two opposite ends of the mounting barrel 140, respectively; and a receiving unit 120, the receiving unit 120 including a receiving lens 122, the receiving lens 122 sleeving the outer side of the mounting barrel 140, and mating surfaces of the receiving lens 122 and the mounting barrel 140 being configured to be in spherical contact.

In the embodiments, the laser emitter 111 and the emission lens 112 of the emission unit 110 are mounted at two opposite ends of the mounting barrel 140, respectively. It can be understood that an optical path channel is formed inside the mounting barrel 140, and the light emitted by the laser emitter 111 passes through the inside of the mounting barrel 140 and is projected outward by the emission lens 112. That is, with the arrangement of the mounting barrel 140, the relative position of the laser emitter 111 and the emission lens 112 is fixed. That is, the direction in which the light emitted by the laser emitter 111 passes through the inside of the mounting barrel 140 and is projected outward by the emission lens 112 is fixed. That is, the direction of emitted light emitted by the emission unit 110 is fixed relative to the axis of the mounting barrel 140. The mounting barrel 140 is mounted inside the receiving lens 122 of the receiving unit 120, and the mating surfaces of the receiving lens 122 and the mounting barrel 140 are configured to be in spherical contact, such that the mounting barrel 140 and the receiving lens 122 form a ball joint; that is, the relative position of the mounting barrel 140 and the receiving lens 122 is adjustable. Therefore, by adjusting the relative position of the axis of the mounting barrel 140 and the axis of the receiving lens 122, the relative position of the direction of the emitted light emitted by the emission unit 110 and the axis of the receiving lens 122 can be adjusted, and thus the direction of emitted light beam can be universally adjusted, meeting the requirements of different directions of the emitted light beam. In addition, the processing accuracy requirements of the lidar 001 can be reduced, and the relative position of the direction of the emitted light emitted by the emission unit 110 and the axis of the receiving lens 122 can still be ensured, thereby reducing the manufacturing cost, reducing the defect rate of the product, and improving the production capacity.

For example, the detection accuracy requirements of a lidar in the related art often exceed the manufacturing capabilities. For example, the direction of laser emission of the lidar is ensured by relying on processing accuracy, which results in a high cost and a low yield rate of the lidar.

Since the mounting barrel 140 and the receiving lens 122 are configured as a ball joint, in the lidar 001 according to the embodiments, in actual application scenarios, during the assembly process, the relative position of the mounting barrel 140 and the emission lens 112 can be adjusted first, such that the laser emission direction of the emission unit 110 and an optical axis of the receiving lens 122 meet the detection accuracy requirements, and then the mounting barrel 140 is fixedly connected to the receiving lens 122, such that the assembly of the emission unit 110 and the receiving lens 122 can be completed, and the lidar 001 can be ensured to meet the detection accuracy requirements. To this end, the processing accuracy requirements for each element can be reduced, thereby reducing the manufacturing cost. In this way, the processing yield rate of the product can be improved, making the product suitable for popularization and application.

The mounting barrel 140 is configured to be cylindrical, and the laser emitter 111 and the emission lens 112 are mounted at two opposite ends of the mounting barrel 140, respectively, such that a collimated optical path can be formed. Specifically, the emission lens 112 is located on an emission optical path of the laser emitter 111, and an exit surface of the emission lens 112 faces the outside of the mounting barrel 140, such that the emission lens 112 and the laser are mounted in the same structural member to form the collimated optical path.

The receiving lens 122 is sleeved on the outside of the mounting barrel 140 mounted with the emission lens 112 and the laser emitter 111. Compared with the lidar in the related art in which an optical axis of the emission lens and the optical axis of the receiving lens are arranged in parallel, the volume of the lidar can be greatly reduced, thereby reducing the space occupied by the lidar 001, expanding the application range of the lidar 001, and meeting the design requirements of the cleaning robot 002 for a compact structure and a small volume. In addition, this is beneficial to reducing the manufacturing cost of the lidar 001, thereby meeting the low-cost design requirements of the cleaning robot 002.

Further, the mounting barrel 140 and the receiving lens 122 may be fixedly connected by means of an adhesive, a threaded structure, a mortise-and-tenon structure, or the like. The mounting barrel 140 and the receiving lens 122 are fixedly connected by means of an adhesive, which is simple to operate and facilitates assembly, and can ensure that the relative positions of the mounting barrel 140 and the receiving lens 122 are reliable and stable after the fixed connection, thereby improving the detection accuracy of the lidar 001.

Further, as shown in FIG. 15, in some possible embodiments, during the assembly process, the mating surfaces of the receiving lens 122 and the mounting barrel 140 are configured to be in spherical contact to adjust the relative position of the receiving lens 122 and the mounting barrel 140, such that the optical axis of the emission lens 112 coincides with the optical axis of the receiving lens 122, or the optical axis of the emission lens 112 is perpendicular to the horizontal line to ensure that an emission optical axis of the emission unit 110 is vertically upward, and then the positions of the receiving lens 122 and the mounting barrel 140 are fixed by an adhesive to achieve the assembly of a structural radar. It can be understood that, for the lidar 001 in which the optical axis of the emission lens 112 and the optical axis of the receiving lens 122 are coaxially disposed, compared with the related art in which the optical axis of the emission lens and the optical axis of the receiving lens are arranged separately, the volume of the lidar 001 can be appropriately reduced, thereby meeting the design requirements of the lidar 001 for a small volume and a compact structure, reducing the space occupied by the cleaning robot 002, expanding the application range of the cleaning robot 002, and facilitating storage. In addition, this is beneficial to reducing the manufacturing cost of the lidar 001.

As shown in FIG. 14, in some possible embodiments according to the present disclosure, the outer peripheral side of the mounting barrel 140 is provided with a convex spherical contact surface 141, the inner peripheral side of the receiving lens 122 is provided with a concave spherical contact surface 1221, and the convex spherical contact surface 141 is disposed opposite to and is at least partially mated with the concave spherical contact surface 1221. Therefore, the mounting barrel 140 and the receiving lens 122 form a ball joint, such that the positions of the mounting barrel 140 and the receiving lens 122 can be adjusted, thereby enabling universal adjustment of the direction of an emitted light beam from the emission unit 110. The convex spherical contact surface 141 and the concave spherical contact surface 1221 are easy to implement and process, and have relatively low manufacturing costs.

Specifically, the central portion of the receiving lens 122 is configured as a hollow structure, the mounting barrel 140 penetrates through the hollow structure and is connected to the receiving lens 122, and the space enclosed by the inner peripheral side of the receiving lens 122 is in the shape of the hollow structure.

As shown in FIGs. 13 and 14, in some possible embodiments according to the present disclosure, a first mounting opening is formed at an end of the mounting barrel 140 away from the laser emitter 111 for accommodating the emission lens 112. The lidar 001 further includes a pressing ring 160. The pressing ring 160 is located on a side of the emission lens 112 away from the laser emitter 111, and the pressing ring 160 is connected to the side wall of the first mounting opening to fix the emission lens 112 at the first mounting opening.

During assembly, the emission lens 112 may be first mounted at the first mounting opening, then the emission lens 112 is clamped at the first mounting opening by using the pressing ring 160, and the pressing ring 160 is connected to the side wall of the first mounting opening, such that the emission lens 112 can be reliably and stably fixed on the mounting barrel 140.

Since the emission lens 112 of the lidar 001 according to the embodiment of the present disclosure may have a small dimension and light weight, in the case that the emission lens is directly fixed on the mounting barrel by using an adhesive as in the related art, the injected adhesive may cause the emission lens to float upward, such that the focal length of the emission lens deviates from a design value, resulting in poor measurement accuracy. In addition, in the case that the emission lens is fixed on the mounting barrel by dispensing adhesive at discrete points around the emission lens with a small dimension, the adhesive may easily remain on the lens surface, leading to obstruction of the light spot energy. Therefore, in the present disclosure, the pressing ring 160 is used to clamp the emission lens 112 at the first mounting opening of the mounting barrel 140, and the pressing ring 160 is connected to the side wall of the first mounting opening, thereby ensuring that the design value of the focal length of the emission lens 112 can be accurate, and thus ensuring good measurement accuracy. In addition, the difficulty in dispensing adhesive at discrete spots around the emission lens 112 can be reduced, assembly can be facilitated, and the problem of obstruction of light spot energy by adhesive can be reduced or avoided.

Specifically, the pressing ring 160 and the side wall of the first mounting opening of the mounting barrel 140 may be fixedly connected by means of an adhesive, a threaded structure, a mortise-and-tenon structure, or other structures. Specifically, adhesive may be dispensed at discrete spots around the pressing ring 160 to connect the pressing ring 160 to the side wall of the first mounting opening, which is simple to operate and facilitates assembly, and can ensure the connection reliability between the pressing ring 160 and the side wall of the first mounting opening, thereby improving the clamping reliability of the emission lens 112.

As shown in FIG. 14, in the above embodiment, the side wall of the first mounting opening is provided with a first boss 142. The emission lens 112 includes a first incident surface 1121 and a first exit surface 1122. The first incident surface 1121 overlaps the first boss 142, and the pressing ring 160 is in contact with the first exit surface 1122 and connected to the side wall of the first mounting opening.

The first incident surface 1121 of the emission lens 112 overlaps the first boss 142 to limit the emission lens 112, which can ensure that the position of the emission lens 112 is reasonable, thereby making the focal length thereof meet the design requirements. Then, the pressing ring 160 is used to press against the emission lens 112 from one side of the first exit surface 1122 of the emission lens 112 and is connected to the side wall of the first mounting opening, such that the emission lens 112 can be reliably and stably clamped and fixed on the mounting barrel 140, which is simple to operate and convenient to mount.

As shown in FIG. 14, in the above embodiment, the side wall of the first mounting opening is further provided with a second boss 143. The inner diameter of the first boss 142 is smaller than that of the second boss 143, and the first boss is located on a side of the second boss 143 close to the laser emitter 111; that is, the second boss 143 is close to the outside of the first mounting opening. The first incident surface 1121 is a planar surface, the first exit surface 1122 is a curved surface, and a limiting groove 1123 is formed in the first exit surface 1122. Specifically, the limiting groove 1123 is an annular groove.

In an actual assembly process, the emission lens 112 may be inserted into the mounting barrel 140 from top to bottom from the outside of the first mounting opening, such that the first incident surface 1121 of the emission lens 112 overlaps the first boss 142 to ensure that the position of the emission lens 112 is reasonable, thereby making the focal length thereof meet the design requirements. Then, a mounting end of the pressing ring 160 is inserted into the first mounting opening, and a positioning groove 161 on the inner wall of the mounting end engages with the limiting groove 1123 on the first exit surface 1122 of the emission lens 112, such that the pressing ring 160 cannot continue to move in the direction close to the laser emitter 111, thereby clamping and fixing the receiving lens 122 between the pressing ring 160 and the first boss 142. Subsequently, the outer wall of the mounting end is fixedly connected to the side wall of the first mounting opening to fix the pressing ring 160. In this way, the receiving lens 122 can be firmly clamped and securely fixed at the first mounting opening.

Specifically, the outer wall of the mounting end and the side wall of the first mounting opening may be connected by means of an adhesive to fix the pressing ring 160 to the mounting barrel 140. Since the outer wall of the mounting end is connected to the side wall of the first mounting opening by means of an adhesive, and the positioning groove 161 on the inner wall of the mounting end engages with the limiting groove 1123 on the first exit surface 1122 of the emission lens 112, the possibility of contamination of the emission lens 112 by adhesive can be reduced, and the problem of obstruction of light spot energy due to contamination of the emission lens 112 by adhesive can be avoided.

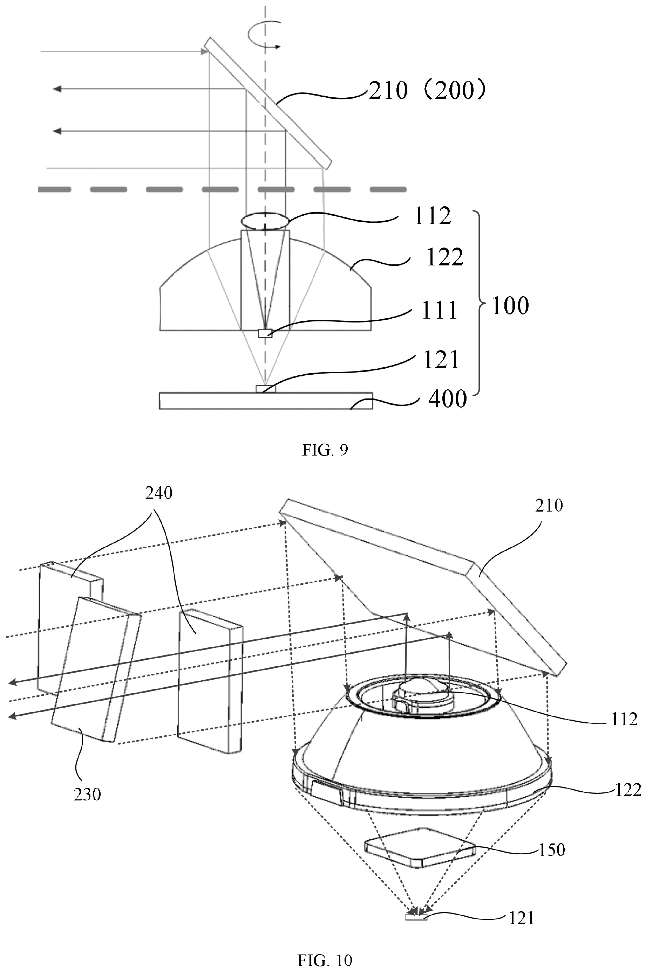

As shown in FIGs. 9, 10, and 11, in some possible embodiments according to the present disclosure, the lidar 001 further includes: a reflecting mirror 210. The reflecting mirror 210 is obliquely disposed above the emission lens 112, and the reflecting mirror 210 is configured to rotate around the optical axis of the receiving lens 122. The receiving unit 120 further includes a laser receiver 121. The light emitted by the laser emitter 111 passes through the emission lens 112, is redirected by the reflecting mirror 210, and then exits, and returned received light is redirected by the reflecting mirror 210, passes through the receiving lens 122, and is then received by the laser receiver 121. Therefore, the ranging of the lidar 001 can be achieved. the reflecting mirror 210 rotates to cooperate with the emission unit 110 and the receiving unit 120, such that the detection range of the laser emitter 111 can be expanded, thereby achieving the detection of obstacles and the surrounding environment in a plurality of directions around the cleaning robot 002. For example, the reflecting mirror 210 is configured to be rotatable by 360° with the optical axis of the receiving lens 122 as a rotation axis, such that a laser detector can provide 360° detection of obstacles and the surrounding environment for the cleaning robot 002, thereby helping improve the sensing precision and sensing accuracy of the cleaning robot 002, and improve the operating accuracy of the cleaning robot 002. Specifically, the solid lines in FIG. 10 represent the emitted light, and the dashed lines in FIG. 10 represent the received light.

The lidar 001 may be a time-of-flight lidar 001, the principle of which is to calculate the distance to a target object using the propagation speed of a laser beam in space and a round-trip time of the reflected laser beam. The time-of-flight lidar 001 has the advantages of high precision, high speed, high resolution, etc., and thus can meet the functional requirements of the cleaning robot 002.

As shown in FIGs. 1, 2, and 3, in some possible embodiments according to the present disclosure, the lidar 001 further includes: a fixed base 130 and a rotating base 220. The mounting barrel 140, the receiving lens 122, and the laser receiver 121 are mounted inside the fixed base 130; the rotating base 220 is rotatably connected above the fixed base 130, and the reflecting mirror 210 is mounted on the rotating base 220. Therefore, the rotation of the rotating base 220 relative to the fixed base 130 can drive the reflecting mirror 210 to rotate relative to the mounting barrel 140, the receiving lens 122, and the laser receiver 121 on the fixed base 130, such that the lidar 001 can detect obstacles and the surrounding environment in a direction around the cleaning robot 002, thereby helping improve the sensing precision and sensing accuracy of the cleaning robot 002, and improve the operating accuracy of the cleaning robot 002.

The rotating base 220 and the fixed base 130 define a mounting chamber in an enclosing manner, and the reflecting mirror 210, the emission unit 110, and the receiving unit 120 are located in the mounting chamber. Therefore, it can be ensured that the emission unit 110, the receiving unit 120, and the reflecting mirror 210 are located in a closed space, thereby reducing stray light interference and improving the detection accuracy of the lidar 001.

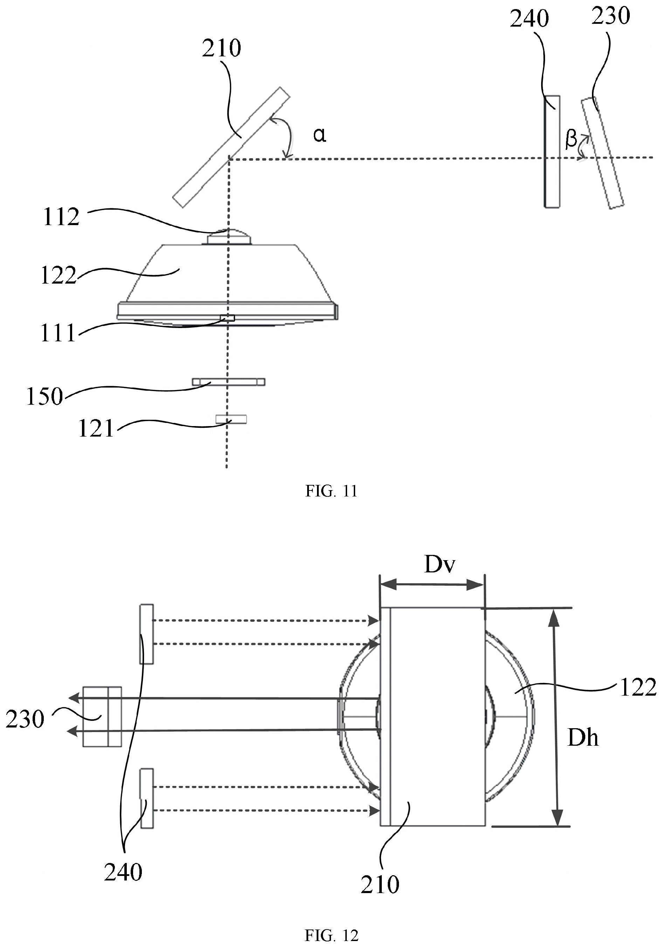

As shown in FIG. 11, in some possible embodiments according to the present disclosure, an inclination angle of the reflecting mirror 210 relative to the horizontal line is 45° to 47°, where the inclination angle of the reflecting mirror 210 relative to the horizontal line is α; that is, α ranges from 45° to 47°. Therefore, it can be ensured that after redirecting the emitted light emitted by the emission unit 110, the reflecting mirror 210 can relatively comprehensively project the emitted light outward through an emission window 221, and after redirecting the returned light, the reflecting mirror can relatively comprehensively project the returned light to the receiving unit 120, thereby reducing the energy loss of the emission unit 110, improving the energy utilization of the emission unit 110, and improving the ranging accuracy of the lidar 001.

Specifically, the range of the inclination angle α of the reflecting mirror 210 relative to the horizontal line may be 45°, 45.5°, 46°, 47°, or other angles.

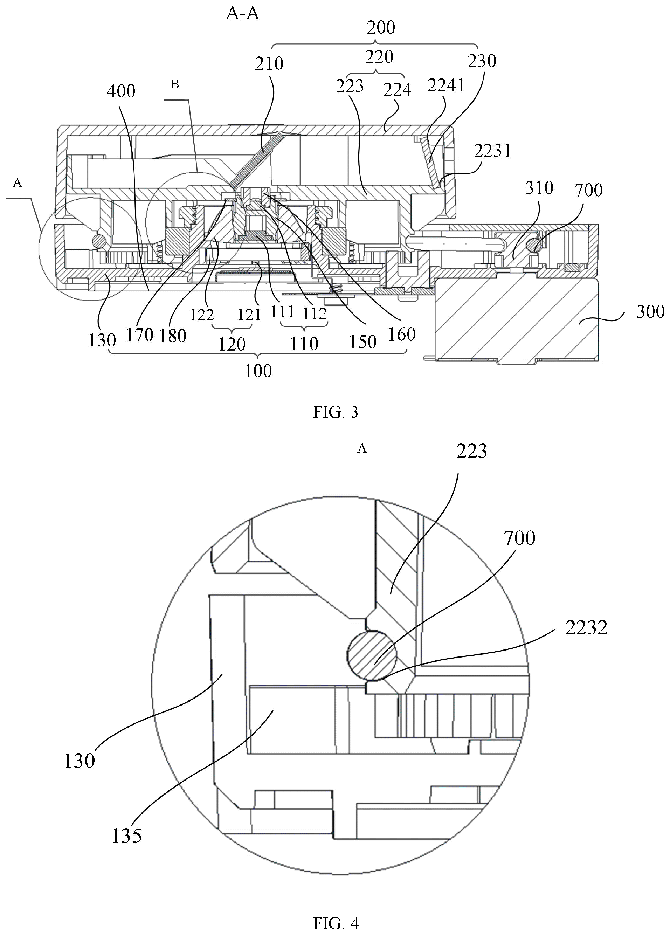

As shown in FIGs. 3, 9, 10, and 11, in the above embodiments, the reflecting mirror 210 includes a reflective surface and a substrate. With the arrangement of the reflective surface, it can be ensured that the emitted light emitted by the emission unit 110 is redirected by the reflective surface of the reflecting mirror 210 and is then projected outward, and the returned received light is redirected by the reflective surface of the reflecting mirror 210 and is then received by the unit. The reflective surface may be a dielectric high-reflective coating or a metal reflective coating, and the substrate may be glass or plastic.

As shown in FIGs. 3 and 14, in some possible embodiments according to the present disclosure, the lidar 001 further includes: a light-shielding ring 170. The light-shielding ring 170 is sleeved on the outside of the mounting barrel 140 and located above the receiving lens 122, and the light-shielding ring 170 is configured to block at least a part of the light directed toward the receiving lens 122, thereby helping improve the detection accuracy of the lidar 001.

Further, a part of the light emitted by the laser emitter 111 passes through the emission lens 112 and then is redirected by the reflecting mirror 210 toward the receiving lens 122. Therefore, the arrangement of the light-shielding ring 170 can effectively prevent stray light generated after the emitted light beam passes through the reflecting mirror 210 from returning to the receiving lens 122 to cause optical crosstalk that affects ranging accuracy, thereby helping improve the detection accuracy of the lidar 001.

The light-shielding ring 170 and the mounting barrel 140 may be connected by means of a snap-fit structure and/or an adhesive, such that the operation is simple, the mounting is convenient, and a reliable connection between the light-shielding ring 170 and the mounting barrel 140 can be ensured. Specifically, the light-shielding ring 170 may be connected to the mounting barrel 140 by means of a snap-fit structure or an adhesive, or the light-shielding ring 170 may be connected to the mounting barrel 140 by means of both the snap-fit structure and the adhesive.

A gap is provided between the light-shielding ring 170 and the receiving lens 122, such that the receiving lens 122 and the mounting barrel 140 can move relative to each other. In this way, during assembly, the emission direction of the laser from the emission unit 110 can be universally adjusted relative to the optical axis of the receiving lens 122, avoiding the problem that the mounting barrel 140 and the receiving lens 122 are jammed and thus cannot be adjusted due to tight contact between the light-shielding ring 170 and the receiving lens 122.

Specifically, the dimension of the gap provided between the light-shielding ring 170 and the receiving lens 122 may be reasonably designed based on the specific structures of the convex spherical contact surface 141 and the concave spherical contact surface 1221.

As shown in FIGs. 1, 2, and 3, during an actual assembly process, the position of the fixed base 130 is fixed. Since the receiving lens 122 is sleeved on the outside of the mounting barrel 140, when the receiving lens 122 is mounted inside the fixed base 130, the mounting barrel 140 is also indirectly mounted on the fixed base 130.

As shown in FIGs. 1, 2, and 3, in some possible embodiments according to the present disclosure, the emission unit 110 further includes an emission circuit 113 configured as a flexible member. A part of the emission circuit 113 is mounted inside the mounting barrel 140, and a part of the emission circuit 113 is located outside the mounting barrel 140. Since the emission circuit 113 is a flexible member, the part of the emission circuit 113 located outside the mounting barrel 140 may change its position under the action of an external force. For example, when the cleaning robot 002 is subjected to an external force during steering or surmounting an obstacle, the part of the emission circuit 113 located outside the mounting barrel 140 may be driven to change its position.

Therefore, in the embodiments, the lidar 001 further includes a limiting ring 180. The limiting ring 180 is configured to be in contact with the part of the emission circuit 113 located outside the mounting barrel 140 to limit the movement of at least a part of the emission circuit 113, and the part of the emission circuit 113 located outside the mounting barrel 140 is limited by the limiting ring 180, thereby ensuring the positioning and orientation of the part of the emission circuit 113, reducing the possibility of movement of the entire emission circuit 113 when the cleaning robot 002 turns or surmounts obstacles, and reducing the influence of the movement of the emission circuit 113 on the energy distribution of a receiving optical path, thus ensuring good detection accuracy. In addition, compared with using adhesive to fix the part of the emission circuit in the related art, using the limiting ring 180 to limit the emission circuit 113 is beneficial to reducing the overall manufacturing cost of the lidar 001 since the cost of the adhesive is relatively high.

Specifically, the emission circuit of the flexible member may be an FPC (flexible printed circuit, flexible circuit board) or another structure.

In the above embodiment, the laser emitter 111 is arranged on the emission circuit 113, and the emission circuit 113 is mounted at the bottom end of the mounting barrel 140; that is, a part of the emission circuit 113 extends to the outside of the mounting barrel 140 through the bottom end of the mounting barrel 140. It can be understood that since the mounting barrel 140 and the receiving lens 212 are mounted inside the fixed base 130, the part of the emission circuit located outside the mounting barrel 140 is located inside the fixed base 130. Therefore, the limiting ring 180 is mounted inside the fixed base 130 and below the mounting barrel 140, such that the part of the emission circuit 113 located outside the mounting barrel 140 overlaps the limiting ring 180, and then the limiting ring 140 is in contact with the part of the emission circuit 113 to limit the part of the emission circuit 113. In this way, the positioning and orientation of the part of the emission circuit 113 can be ensured, thereby reducing the influence on the energy distribution of the receiving optical path due to the movement of the emission circuit 113 with the cleaning robot 002, and thus ensuring good detection accuracy.

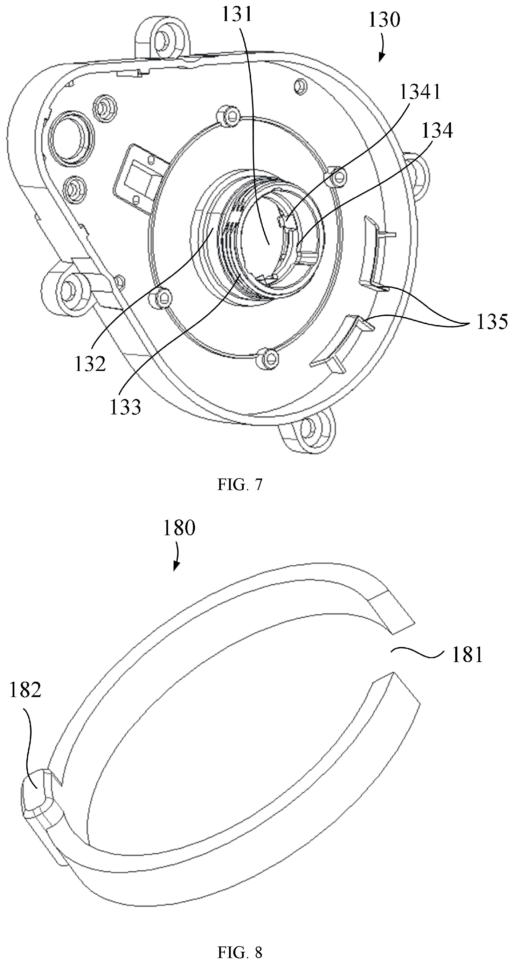

As shown in FIG. 7, in some possible embodiments according to the present disclosure, an annular mounting groove 131 is disposed inside the fixed base 130, a first step 134 is disposed inside the mounting groove 131, and the receiving lens 122 is fixed on the first step 134. Specifically, the receiving lens 122 may be fixed on the first step 134 by means of an adhesive, a snap-fit structure, or another structure.

As shown in FIG. 8, a positioning part located below the first step 134 is further disposed inside the fixed base 130, the limiting ring 180 is provided with a snap-fit part 181, and the positioning part and the snap-fit part 181 are adapted to limit the movement of the limiting ring 180 relative to the fixed base 130. Therefore, the limiting ring 180 can be quickly and conveniently fixed on the fixed base 130 using the positioning part and the snap-fit part 181, and the mounting cost is low. The snap-fit part 181 includes a slot, and/or a notch, and/or a protrusion. In the case where the snap-fit part 181 is a slot and/or a notch, the material consumption of the limiting ring 180 can be further reduced, and the manufacturing cost of the limiting ring 180 can be further reduced, thereby reducing the manufacturing cost of the lidar 001.

A clearance notch 1341 for providing clearance for the emission circuit 113 is formed on the first step 134, an end part of the limiting ring 180 facing the mounting barrel 140 is provided with a protruding first supporting part 182, and the first supporting part 182 is opposite to the clearance notch 1341 to support the emission circuit 113 located in the clearance notch 1341. Therefore, the emission circuit 113 located in the clearance notch 1341 will not fall out of the clearance notch 1341 under the support of the first supporting part 182. That is, the emission circuit 113 located in the clearance notch 1341 is retained in the clearance notch 1341 by the first supporting part 182. As a result, the positioning and orientation of a part of the emission circuit 113 can be ensured, thereby reducing the possibility of the movement of the entire emission circuit 113 when the cleaning robot 002 turns or surmounts obstacles, reducing the influence of the movement of the emission circuit 113 on the energy distribution of the receiving optical path, thus ensuring good detection accuracy.

As shown in FIGs. 1 and 3, the lidar 001 further includes a driving part 300 and a transmission part 700. The driving part 300 is connected to the fixed base 130, and the driving part 300 is connected to the rotating base 220 by means of the transmission part 700 to drive the rotating base 220 to rotate relative to the fixed base 130. Therefore, the reflecting mirror 210 on the rotating base 220 can rotate around the optical axis of the receiving lens 122, so as to expand the detection range of the lidar 001. For example, the driving part 300 can drive the rotating base 220 to rotate 360° relative to the fixed base 130, such that the lidar 001 can provide 360° detection of obstacles and the surrounding environment for the cleaning robot 002, thereby helping improve the sensing precision and sensing accuracy of the cleaning robot 002, and improve the operating accuracy of the cleaning robot 002.

It can be understood that the transmission part 700 may alternatively be a gear, a transmission belt, or another transmission mechanism. Taking the transmission part 700 being a transmission belt as an example, the driving part 300 is connected to the rotating base 220 through the transmission belt. For example, the driving part 300 is a motor, and an output shaft of the motor is connected to the rotating base 220 through the transmission belt, so as to drive the rotating base 220 to rotate relative to the fixed base 130.

As shown in FIGs. 3, 4, and 6, in some possible embodiments according to the present disclosure, the transmission part 700 is a transmission belt, a second supporting part 135 is disposed in the fixed base 130, and the second supporting part 135 is located below the transmission belt and disposed adjacent to the transmission belt. In this way, when the transmission belt initially derails downward and tends to continue to derail downward, the second supporting part 135 can effectively support the transmission belt, preventing the transmission belt from continuing to derail downward and thus affecting transmission accuracy, thereby ensuring the reliability of the rotation of the rotating base 220 relative to the fixed base 130.

As shown in FIGs. 3, 4, and 6, in some possible embodiments according to the present disclosure, a belt groove 2232 is formed in the rotating base 220, the driving part 300 includes an output shaft and a timing pulley 310 mounted on the output shaft, and a transmission belt is wound around the belt groove 2232 and the output shaft of the driving part 300. In this way, the output shaft of the driving part 300 rotates to drive the timing pulley 310 to perform transmission, such that the rotating base 220 can be driven to rotate relative to the fixed base 130 via the transmission belt.

The second supporting part 135 on the fixed base 130 is located below the belt groove 2232 and disposed adjacent to an opening of the belt groove 2232. In this way, the transmission belt can be effectively supported in the belt groove 2232 by the second supporting part 135, thereby preventing the transmission belt from derailing from the belt groove 2232. It can be understood that, in a normal case, the belt groove 2232 provides a certain limiting function for the transmission belt, such that the transmission belt can be stably seated in the belt groove 2232 to drive the rotating base 220 and the timing pulley 310 to rotate synchronously. In the event that the transmission belt tends to derail from the belt groove 2232, the transmission belt will move to abut against the second supporting part 135. Since the second supporting part 135 is located below the belt groove 2232 and disposed adjacent to the opening of the belt groove 2232, under the support of the second supporting part 135, the transmission belt is still located in the belt groove 2232, and thus will not derail from the belt groove 2232. In this way, the belt groove 2232 and the second supporting part 135 cooperate with each other, which can effectively prevent the rotating base 220 from failing to rotate relative to the fixed base 130 caused by the transmission belt derailing from the belt groove 2232 due to an external force during production or use of the lidar 001, thereby improving the reliability of the lidar 001.

As shown in FIG. 4, in the above embodiments, the top of the second supporting part 135 is not higher than the inner bottom of the belt groove 2232. This arrangement can prevent the rotating base 220 from failing to rotate smoothly due to interference between the top of the second supporting part 135 and the part of the transmission belt exposed outside the belt groove 2232 when the top of the second supporting part is higher than the inner bottom of the belt groove 2232. As a result, the friction between the transmission belt and the top of the second supporting part 135 during rotation of the rotating base 220 can be reduced, thereby helping prolong the service life of the transmission belt.

Specifically, the height difference between the top of the second supporting part 135 and the inner bottom of the belt groove 2232 may be 1 mm to 5 mm. The height difference between the top of the second supporting part 135 and the inner bottom of the belt groove 2232 is reasonably set, such that when friction between the transmission belt and the top of the second supporting part 135 during rotation of the rotating base 220 is reduced as much as possible, it can ensure that the second supporting part 135 provides a good supporting function for the transmission belt that tends to derail from the belt groove 2232, thereby enabling the transmission belt to be reliably limited in the belt groove 2232 and not to derail from the belt groove 2232. Specifically, the height difference between the top of the second supporting part 135 and the inner bottom of the belt groove 2232 may be 1 mm, 2 mm, 3 mm, 5 mm, or another value.

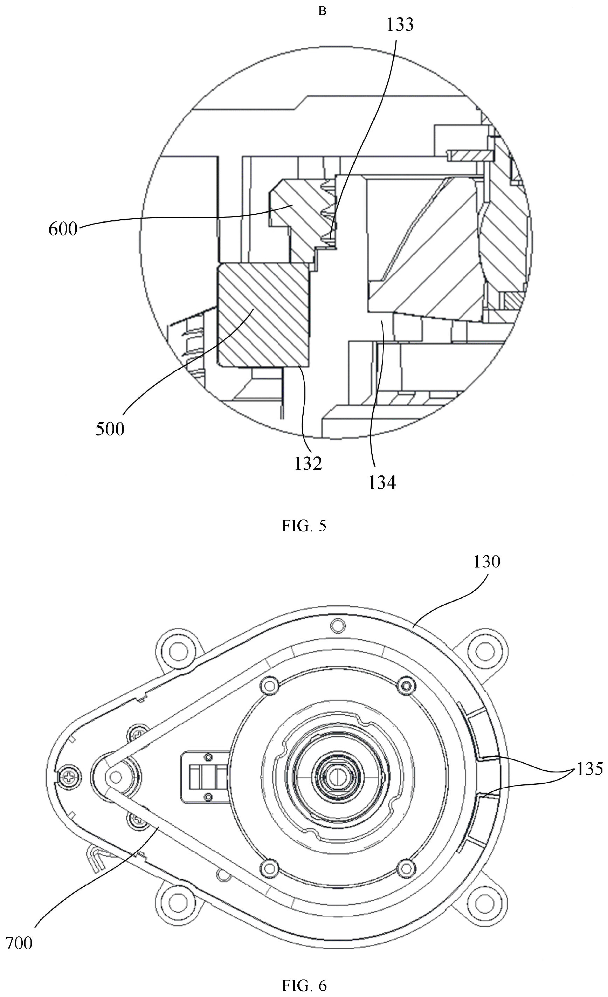

Further, as shown in FIG. 6, since the transmission belt is sleeved on the timing pulley 310, the timing pulley 310 provides a certain supporting force to the transmission belt. The second supporting part 135 and the timing pulley 310 are distributed on two sides of the mounting barrel 140. The second supporting part 135 and the timing pulley 310 support the transmission belt from the two sides, which is beneficial to improving the stability of the movement of the transmission belt, thereby improving the stability of the rotation of the rotating base 220 relative to the fixed base 130 and improving the detection accuracy.

As shown in FIG. 6, one or a plurality of second supporting parts 135 are provided, and the plurality of second supporting parts 135 are spaced apart. The number of second supporting parts 135 may be reasonably set based on a specific structure of the second supporting part 135, thereby providing reliable and stable support for the transmission belt. Specifically, the number of second supporting parts 135 may be one, two, three, or other numbers. Specifically, the second supporting part 135 may be a protruding structure disposed on the fixed base 130.

As shown in FIGs. 3 and 5, the lidar 001 further includes a rotating member 500 and a locking member 600. The rotating member 500 is sleeved on the outer side of the mounting groove 131 and is connected to the rotating base 220, the locking member 600 is sleeved on the outer side of the mounting groove 131 and is located above the rotating member 500, and the locking member 600 is connected to the outer wall of the mounting groove 131 to lock the rotating member 500 on the mounting groove 131. That is, in the embodiments, by using a single locking member 600, the rotating member 500 can be locked on the outer wall of the mounting groove 131 to achieve a rotatable connection between the rotating base 220 and the fixed base 130. The structure is simple, and disassembly and assembly are facilitated. However, in the related art, the rotating member usually requires a plurality of components to be locked. For example, in the related art, resilient barbs and screws are usually used in cooperation to lock the rotating member, resulting in a large number of components and a complex assembly process. Therefore, in the embodiments, by using a single locking member 600 to achieve the locking of the rotating member 500, the number of components is reduced, and the assembly process is simple, which can further reduce the manufacturing cost of the time-of-flight lidar 001 and meet the low-cost design requirements of the cleaning robot 002.

As shown in FIG. 7, in the above embodiments, the outer wall of the mounting groove 131 is provided with a second step 132, the rotating member 500 overlaps the second step 132, and the second step 132 is used to pre-position the rotating member 500. This is beneficial to improving the assembly efficiency and assembly accuracy of the rotating member 500, thereby improving the processing efficiency of the time-of-flight radar.

As shown in FIGs. 5 and 7, the outer wall of an end part, facing the rotating base 220, of the mounting groove 131 is provided with a threaded structure 133, the locking member 600 is a locking nut, and the rotating member 500 includes an inner ring and an outer ring. For example, the rotating member 500 is a bearing, the locking nut engages with the threaded structure 133 to clamp the inner ring of the bearing between the locking nut and the second step 132, and the outer ring of the bearing is connected to the rotating base 220. In this way, by means of the engagement between a single locking nut and the threaded structure 133 on the outer wall of the mounting groove 131, the rotating member 500 can be stably and securely locked outside the mounting groove 131, thereby ensuring a rotatable connection between the rotating base 220 and the fixed base 130. The assembly operation is simple and easy to achieve, the threaded structure 133 on the outer wall of the mounting groove 131 is convenient to process, and the cost of the locking nut is low, which can effectively reduce the manufacturing cost of the time-of-flight radar.

Further, as shown in FIG. 3, the inner wall of the mounting groove 131 is in communication with the inside and outside of the mounting chamber; that is, the mounting groove 131 is a through groove. The mounting groove 131 extends through the fixed base 130, the main circuit 400 is mounted at the bottom of the fixed base 130 and located outside the mounting chamber, and the main circuit 400 is electrically connected to the emission circuit 113 and the receiving circuit through the mounting groove 131. Since the main circuit 400 is located outside the mounting chamber, the connection between the main circuit 400 and a power supply part is facilitated, and the maintenance and replacement of the main circuit 400 is facilitated. In addition, the main circuit 400 located outside the mounting chamber has good ventilation and heat dissipation effects, avoiding the problem that the main circuit is prone to failure due to poor ventilation and heat dissipation effects when arranged inside the mounting chamber, and thus helping prolong the service life of the main circuit 400 and improve the reliability of the time-of-flight lidar 001.

As shown in FIGs. 11 and 15, in some possible embodiments according to the present disclosure, the laser receiver 121 is located below the laser emitter 111, the receiving lens 122 is located below the emission lens 112, and in a plane perpendicular to the optical axis of the emission lens 112 and/or the optical axis of the receiving lens 122, a projection of the receiving lens 122 is located on the outer peripheral side of a projection of the emission lens 112. The laser receiver 121 is a single-photon receiver 121.

With this arrangement, the laser receiver 121 is prevented from blocking the light emitted by the laser emitter 111, thereby reducing optical energy loss of the laser emitter 111 and improving the optical energy utilization of the laser emitter 111. It can be understood that the returned received light from the obstacles and the surrounding environment, after being redirected by the receiving lens 122, can be in contact with the laser receiver 121.

As shown in FIG. 15, in the embodiments, since the projection of the receiving lens 122 is located on the outer peripheral side of the projection of the emission lens 112 in the plane perpendicular to the optical axis of the emission lens 112 and/or the optical axis of the receiving lens 122, the effective area of the receiving lens 122 is small. Therefore, the laser receiver 121 is configured as a single-photon receiver 121. For example, the laser receiver 121 is a single-photon receiver 121 employing a SPAD (single photon avalanche diode, single-photon detector), which has significant advantages in terms of integration level, optical gain, accuracy, etc. than exemplary optical receiver structures such as a PIN (positive-intrinsic-negative, photodiode) and an APD (avalanche photon diode, avalanche diode), thereby ensuring the detection accuracy of the time-of-flight lidar 001.

In some possible embodiments according to the present disclosure, the fixed base 130, and the emission unit 110, the receiving unit 120, the main circuit 400, and the like that are mounted on the fixed base 130 form a fixed module 100, and the rotating base 220 and the reflecting mirror 210 mounted on the rotating base 220 form the rotating module 200. An emission window 221 and receiving windows 222 are formed on the rotating base 220, and the receiving windows 222 are distributed in pairs on two sides of the emission window 221.

In the embodiments, the cleaning robot 002 of the lidar 001 device main body 021 cleaning robot 002 cleaning robot 002 cleaning robot 002 cleaning robot 002 cleaning robot 002 the receiving windows 222 are arranged in pairs on two sides of the emission window 221. That is, centered on the emission window 221, an equal number of receiving windows 222 are arranged on two sides of the emission window 221. Therefore, the consistency of detection structures at various angles of the lidar 001 can be improved. For example, the consistency of ranging at various angles of the lidar 001 can be improved.

Further, along a circumferential direction of the rotating base 220, the receiving windows 222 are arranged on two sides of the emission window 221 in pairs; that is, along the circumferential direction of the rotating base 220, the projections of the receiving windows 222 in a horizontal plane are located on two sides of the projection of the emission window 221 in the horizontal plane. In this way, the height of the lidar 001 can be reduced, such that the lidar 001 can be conveniently and accurately mounted on the device main body 021 of the cleaning robot 002, facilitating the mounting of the cleaning robot 002. In addition, the overall height of the cleaning robot 002 can be reduced, meeting the design requirements for a compact structure and a small volume of the cleaning robot 002, reducing the space occupied by the cleaning robot 002, expanding the application range of the cleaning robot 002, and facilitating storage.

It can be understood that the shape of the emission window 221 and the shape of the receiving window 222 may be the same or different. As shown in FIG. 1, the shape of the emission window 221 is circular, and the shape of the receiving window 222 is rectangular.

It can be understood that, in a horizontal direction, the geometric center of the emission window 221 and the geometric center of the receiving window 222 may be flush or staggered.

Specifically, the number of receiving windows 222 may be one pair, two pairs, three pairs, or other number pairs; that is, one receiving window 222, two receiving windows 222, three receiving windows 222, or other number of receiving windows 222 may be arranged on each side of the emission window 221 in the horizontal direction. It can be understood that the number of pairs of the receiving windows 222 may be reasonably selected based on the dimension of the lidar 001.As shown in FIG. 1, the number of pairs of the receiving windows 222 is one pair.

As shown in FIG. 12, in some possible embodiments according to the present disclosure, the dimension of the reflecting mirror 210 includes a first dimension Dv and a second dimension Dh that are perpendicular to each other, and a direction of the first dimension Dv is parallel to a horizontal line. For example, the first dimension Dv may be understood as the width of the reflecting mirror 210, and the second dimension Dh may be understood as the length of the reflecting mirror 210. It can be understood that the reflecting mirror 210 may further include a third dimension, and the third dimension may be understood as the thickness of the reflecting mirror 210. The dimension of an emission aperture of the emission unit 110 is D1, and the dimension of a receiving aperture of the receiving unit 120 is D2, where Dv satisfies: D1 < Dv/1.414 < D2, and Dh satisfies: D2 < Dh.

This arrangement, on the basis of ensuring that the lidar 001 has a sufficient receiving area, can effectively reduce the height of the lidar 001, such that the lidar 001 can be conveniently and accurately mounted on the device main body 021 of the cleaning robot 002, facilitating the mounting of the cleaning robot 002. In addition, the overall height of the cleaning robot 002 can be reduced, thereby reducing the space occupied by the cleaning robot 002, expanding the application range of the cleaning robot 002, and facilitating storage.

As shown in FIGs. 1, 10, and 12, in some possible embodiments according to the present disclosure, an opening area of the emission window 221 is greater than an exit area of the emission aperture. The emission aperture may be understood as the emission lens 112 of the emission unit 110; that is, the opening area of the emission window 221 needs to be greater than an area of the exit surface of the emission lens 112. This arrangement can ensure that the area of the emission window 221 is large enough, such that the light emitted by the emission unit 110 is enabled to be relatively comprehensively projected out through the emission window 221 after the angle of the light is changed by the reflecting lens, thereby reducing the energy loss of the emission unit 110 and improving the energy utilization of the emission unit 110.

Specifically, the emission window 221 may have a circular shape, a rectangular shape, or other shapes. When the emission window 221 is a circular window, the dimension of the emission window 221 may be understood as the diameter of the emission window 221. In this case, the diameter of the emission window 221 is greater than the diameter of the emission lens 112. When the emission window 221 is a rectangular window, both the length and the width of the emission window 221 are greater than the diameter of the emission lens 112.

As shown in FIGs. 3, 10, 11, and 12, in some possible embodiments according to the present disclosure, the lidar 001 further includes a first window lens 230. The first window lens 230 is mounted on the rotating base 220 and corresponds to the emission window 221, and the first window lens 230 is configured to shield the emission window 221. The first window lens 230 is obliquely disposed relative to the light output axis of the reflecting mirror 210, such that the first window lens 230 is not completely perpendicular to the light output axis of the reflecting mirror 210, thereby avoiding optical back-reflection crosstalk, and thus improving the ranging accuracy of the lidar 001.

Further, as shown in FIG. 11, the inclination angle of the first window lens 230 relative to the light output axis of the reflecting mirror 210 is β, and β ranges from 2° to 45°. Specifically, the inclination angle of the first window lens 230 relative to the light output axis of the reflecting mirror 210 may be reasonably set based on the arrangement position and dimension of the reflecting mirror 210, so as to effectively avoid optical back-reflection crosstalk. Specifically, the inclination angle β of the first window lens 230 relative to the light output axis of the reflecting mirror 210 may be 2°, 15°, 30°, 45°, or other angles.

As shown in FIG. 3, in some possible embodiments according to the present disclosure, the rotating base 220 includes a base body 223 and an upper cover 224 that are detachably connected. The reflecting mirror 210 is mounted on the base body 223, and the base body 223 is rotatably connected to the fixed base 130, so as to drive the reflecting mirror 210 to rotate relative to the fixed base 130. A first slot 2231 is formed in the base body 223, a second slot 2241 is formed in the upper cover 224, and the upper cover 224 is connected to the base body 223, such that both ends of the first window lens 230 are seated in the first slot 2231 and the second slot 2241, respectively; that is, the first window lens 230 is snap-fitted and clamped between the upper cover 224 and the base body 223 by the upper cover 224 and the base body 223, thereby achieving a connection between the first window lens 230 and the rotating base 220. Compared with the related art in which the first window lens is mounted on the rotating base by an adhesive, the mounting manner of the first window lens 230 eliminates the cost of the adhesive, which is beneficial to reducing the manufacturing cost of the lidar 001, thereby meeting the low-cost design requirement of the lidar 001.

Specifically, the upper cover 224 and the base body 223 may be connected by means of a snap-fit structure, a threaded structure 133, an adhesive, or the like.

As shown in FIGs. 10 and 11, in some possible embodiments according to the present disclosure, the fixed module 100 further includes a light-homogenizing element 150, and the light-homogenizing element 150 is located between the laser receiver 121 and the receiving lens 122.

With the arrangement of the light-homogenizing element 150, the echo uniformity at a photosensitive surface of the laser receiver 121 can be improved. Therefore, the ranging deviation of the lidar 001 during operation can be reduced, thereby improving the radar ranging performance. In addition, the calibration deviation during the production process of the lidar 001 can be reduced, thereby improving the yield rate of product production.

The light-homogenizing element 150 mainly includes a ground glass, a diffuser plate, a DOE (diffractiveoptical element, diffractiveoptical element), or other optical elements having a light-homogenizing function.

As shown in FIGs. 10 and 11, in some possible embodiments according to the present disclosure, the rotating module 200 further includes an optical filter 240 mounted on the rotating base 220, and the optical filter 240 corresponds to the receiving window 222 and is located between the receiving window 222 and the reflecting mirror 210. That is, each receiving window 222 corresponds to one optical filter 240, and the optical filter 240 can filter out background light from the received light reflected by the obstacles and the surrounding environment, so as to reduce stray light interference and improve the detection accuracy of the lidar 001.

The optical filter 240 is a narrow-band optical filter 240, and a bandwidth specification of the optical filter 240 is less than or equal to 50 nm to ensure a good filtering effect. Specifically, the bandwidth specification of the optical filter 240 may be 10 nm, 30 nm, 40 nm, 50 nm, or other values.

In some possible embodiments according to the present disclosure, the diameter of the receiving lens 122 ranges from 10 mm to 20 mm. Specifically, the diameter of the receiving lens 122 may be 10 mm, 14 mm, 16 mm, 20 mm, or other dimensions.

The diameter of the hollow structure of the receiving lens 122 ranges from 5 mm to 10 mm. Specifically, the diameter of the hollow structure of the receiving lens 122 may be 5 mm, 6 mm, 8 mm, 10 mm, or other dimensions. It can be understood that since the hollow structure may have an irregular shape, the diameter of the hollow structure can be understood as the maximum diameter of the hollow structure.

The focal length of the receiving lens 122 ranges from 8 mm to 20 mm. Specifically, the focal length of the receiving lens 122 may be 8 mm, 14 mm, 16 mm, 20 mm, or other dimensions.

The ratio of the diameter to the focal length of the receiving lens 122 ranges from 0.8 to 2.2. Specifically, the ratio of the diameter to the focal length of the receiving lens 122 may be 0.8, 1, 1.5, 2, 2.2, or other values.

The diameter of the emission lens 112 ranges from 3 mm to 8 mm. Specifically, the diameter of the emission lens 112 may be 3 mm, 5 mm, 6 mm, 8 mm, or other dimensions.

The focal length of the emission lens 112 ranges from 3 mm to 10 mm. Specifically, the focal length of the emission lens 112 may be 3 mm, 6 mm, 8 mm, 10 mm, or other dimensions.

The material of the receiving lens 122 may be glass, PMMA (polymethyl methacrylate, polymethyl methacrylate), or PC (polycarbonate, polycarbonate).

The material of the emission lens 112 may be glass, PMMA (polymethyl methacrylate, polymethyl methacrylate), or PC (polycarbonate, polycarbonate).

The laser emitter 111 may be an LD (laser diode, semiconductor laser), a VCSEL (vertical cavity surface emitting laser, vertical cavity surface emitting laser), or the like.

The laser receiver 121 mainly includes a PIN (positive-intrinsic-negative, photodiode), an APD (avalanche photon diode, avalanche diode), a SPAD (single photon avalanche diode, single-photon detector), a SIPM (silicon photomultiplier, silicon photomultiplier), and the like (the SPAD is used in Qiuniu).

As shown in FIG. 16, in the second aspect of the present disclosure, a cleaning robot 002 is provided, which includes: a device main body 021; and the lidar 001 according to any embodiment of the first aspect, the lidar 001 being disposed on the device main body 021. Since the cleaning robot 002 is provided with the lidar 001 according to any embodiment of the first aspect, the cleaning robot has all the technical effects of the lidar 001, and details are not described herein again.

Further, the cleaning robot 002 is further configured for a cleaning system. That is, the cleaning system includes the cleaning robot 002 and a cleaning docking station. The cleaning robot 002 includes the lidar 001, and the lidar 001 plays a vital role in operating conditions such as mapping, navigation, and obstacle avoidance. Therefore, the cleaning robot 002 can accurately return to the cleaning docking station under the action of the lidar 001. Specifically, when the cleaning robot 002 starts to operate, the cleaning robot 002 departs from the cleaning docking station to perform a cleaning task. When the cleaning robot 002 completes the cleaning task or in other cases where the cleaning task needs to be suspended, the cleaning robot 002 may return to the cleaning docking station for operations such as charging, and/or water replenishment, and/or cleaning, and/or dust collection.

The present disclosure has been described with reference to the above embodiments. It should be understood that, however, the above embodiments are only for the purpose of illustration and description and are not intended to limit the present disclosure to the scope of the embodiments described. In addition, those skilled in the art can understand that the present disclosure is not limited to the above embodiments. More variations and modifications can be made according to the teachings of the present disclosure, and these variations and modifications all fall within the protection scope of the present disclosure. The protection scope of the present disclosure is defined by the appended claims and their equivalents.

## Claims

1. A lidar (001), wherein the lidar comprises:
a mounting barrel (140);
an emission unit (110), the emission unit (110) comprising a laser emitter (111) and an emission lens (112), and the laser emitter (111) and the emission lens (112) being mounted at two opposite ends of the mounting barrel (140), respectively; and
a receiving unit (120), the receiving unit (120) comprising a receiving lens (122), the receiving lens (122) sleeving an outer side of the mounting barrel (140), and mating surfaces of the receiving lens (122) and the mounting barrel (140) being configured to be in spherical contact.

2. The lidar (001) according to claim 1, wherein
an outer peripheral side of the mounting barrel (140) is provided with a convex spherical contact surface (141), an inner peripheral side of the receiving lens (122) is provided with a concave spherical contact surface (1221), and the convex spherical contact surface (141) is disposed opposite to and is at least partially mated with the concave spherical contact surface (1221).

3. The lidar (001) according to claim 1, wherein
a first mounting opening for accommodating the emission lens (112) is formed at an end of the mounting barrel (140) away from the laser emitter (111); and
the lidar further comprises a pressing ring (160), the pressing ring (160) is located on a side of the emission lens (112) away from the laser emitter (111), and the pressing ring (160) is connected to a side wall of the first mounting opening to clamp the emission lens (112) at the first mounting opening.

4. The lidar (001) according to claim 3, wherein
the side wall of the first mounting opening is provided with a first boss (142), the emission lens (112) comprises a first incident surface (1121) and a first exit surface (1122), the first incident surface (1121) overlaps the first boss (142), and the pressing ring (160) is in contact with the first exit surface (1122) and is connected to the side wall of the first mounting opening.

5. The lidar (001) according to claim 4, wherein
the side wall of the first mounting opening is further provided with a second boss (143), and an inner diameter of the first boss (142) is smaller than an inner diameter of the second boss (143) and the first boss is located on a side of the second boss (143) close to the laser emitter (111);
a limiting groove (1123) is formed on the first exit surface (1122); and
the pressing ring (160) comprises a mounting end accommodated in the first mounting opening, a positioning groove (161) is formed on an inner wall of the mounting end, the positioning groove (161) is engaged with the limiting groove (1123) to enable the mounting end to be limited on a side of the second boss (143) away from the first boss (142), and an outer wall of the mounting end is connected to the side wall of the first mounting opening.

6. The lidar (001) according to claim 1, wherein the lidar further comprises:
a light-shielding ring (170), the light-shielding ring (170) being sleeved on outside of the mounting barrel (140) and being located above the receiving lens (122), and the light-shielding ring (170) being configured to shield at least a part of light directed toward the receiving lens (122).

7. The lidar (001) according to claim 6, wherein
the light-shielding ring (170) is connected to the mounting barrel (140) by means of a snap-fit structure and/or an adhesive; and
a gap is provided between the light-shielding ring (170) and the receiving lens (122), such that the receiving lens (122) and the mounting barrel (140) are movable relative to each other.

8. The lidar (001) according to claim 1, wherein the lidar further comprises:
a reflecting mirror (210), the reflecting mirror (210) being obliquely disposed above the emission lens (112), and the reflecting mirror (210) being configured to rotate around an optical axis of the receiving lens (122),
wherein the receiving unit (120) further comprises a laser receiver (121), light emitted by the laser emitter (111) passes through the emission lens (112), is redirected by the reflecting mirror (210), and is then projected, and returned received light is redirected by the reflecting mirror (210), passes through the receiving lens (122), and is then received by the laser receiver (121).

9. The lidar (001) according to claim 8, wherein
a part of the light emitted by the laser emitter (111) that is emitted from the emission lens (112) is redirected by the reflecting mirror (210) and is then directed toward the receiving lens (122).

10. The lidar (001) according to claim 8, wherein the lidar further comprises:
a fixed base (130), the mounting barrel (140), the receiving lens (122), and the laser receiver (121) being mounted inside the fixed base (130); and
a rotating base (220), the rotating base (220) being rotatably connected above the fixed base (130), and the reflecting mirror (210) being mounted on the rotating base (130).

11. The lidar (001) according to claim 1, wherein
the emission unit (110) further comprises an emission circuit (113) configured as a flexible member, a part of the emission circuit (113) is mounted inside the mounting barrel (140), and a part of the emission circuit (113) is located outside the mounting barrel (140); and
the lidar (001) further comprises a limiting ring (180), and the limiting ring (180) is configured to be in contact with the part of the emission circuit (113) located outside the mounting barrel (140) to limit movement of at least a part of the emission circuit (113).

12. The lidar (001) according to claim 11, wherein
the laser emitter (111) is arranged on the emission circuit (113), and the emission circuit (113) is mounted on a bottom end of the mounting barrel (140); and
the limiting ring (180) is mounted inside a fixed base (130) of the lidar (001) and is located below the mounting barrel (140) to be in contact with the part of the emission circuit (113) located outside the mounting barrel (140).

13. The lidar (001) according to claim 12, wherein
an annular mounting groove (131) is disposed inside the fixed base (130), a first step (134) is disposed inside the mounting groove (131), and the receiving lens (122) is fixed on the first step (134); and
a positioning part located below the first step (134) is disposed inside the fixed base (130), the limiting ring (180) is provided with a snap-fit part (181), and the positioning part and the snap-fit part (181) are adapted to limit movement of the limiting ring (180) relative to the fixed base (130), wherein the snap-fit part (181) comprises a slot, and/or a notch, and/or a protrusion.

14. The lidar (001) according to claim 13, wherein
a clearance notch (1341) for providing clearance for the emission circuit (113) is formed on the first step (134), an end part of the limiting ring (180) facing the mounting barrel (140) is provided with a protruding first supporting part (182), and the first supporting part (182) is opposite to the clearance notch (1341) to support the emission circuit (113) located in the clearance notch (1341).

15. The lidar (001) according to claim 1, wherein the lidar further comprises:
a driving part (300) and a transmission part (700), the driving part (300) being connected to a fixed base (130) of the lidar (001), and the driving part (300) being connected to a rotating base (220) of the lidar (001) by means of the transmission part (700) to drive the rotating base (220) to rotate relative to the fixed base (130).

16. The lidar (001) according to claim 15, wherein
the transmission part (700) comprises a transmission belt, a second supporting part (135) is disposed in the fixed base (130), and the second supporting part (135) is located below the transmission belt and is disposed adjacent to the transmission belt.

17. The lidar (001) according to claim 16, wherein
a belt groove (2232) is formed on the rotating base (220), the driving part (300) comprises an output shaft and a timing pulley (310) mounted on the output shaft, and the transmission belt is wound around the belt groove (2232) and the timing pulley (310); and
the second supporting part (135) is located below the belt groove (2232) and is disposed adjacent to an opening of the belt groove (2232).

18. The lidar (001) according to claim 17, wherein
a top of the second supporting part (135) is not higher than an inner bottom of the belt groove (2232); and
the second supporting part (135) and the timing pulley (310) are distributed on two sides of the mounting barrel (140), one or a plurality of second supporting parts (135) are provided, and the plurality of second supporting parts (135) are spaced apart.

19. A cleaning robot (002), wherein the cleaning robot comprises:
a device main body; and
the lidar (001) according to any one of claims 1 to 18, the lidar (001) being disposed in the device main body.
